# EUROPÄISCHE PATENTANMELDUNG

(11) **EP 1 710 544 A2**
(43) Veröffentlichungstag der Anmeldung: **11.10.2006**
(21) Anmeldenummer: 06003746.2
(22) Anmeldetag: 24.02.2006
(51) Int. Cl.: G01F 1/075

(54) **Wasserzähler, umfassend ein Messsystem zur Messung einer Durchflussmenge**

(30) Priorität: 09.04.2005 DE 102005016373
(71) Anmelder: SIKA Dr.Siebert & Kühn GmbH & Co. KG., 34260 Kaufungen (DE)
(72) Erfinder: Loreit, Uwe Dipl.-Phys., 35580 Wetzlar (DE); Ketelsen, Jörn-Ove, 37139 Adelebsen (DE)
(74) Vertreter: WALTHER, WALTHER & HINZ Patentanwälte - European Patent Attorneys

(57) **Zusammenfassung**

Die Erfindung betrifft einen Wasserzähler, umfassend ein Messsystem zur Messung einer Durchflussmenge mit einem Messrad, welches proportional zur Durchflussmenge drehbar ausgebildet ist und mit mindestens einem an dem Messrad angeordneten Permanentmagneten (1) sowie zwei parallel zur Rotationsachse (2) des Messrades versetzten sowie zur Rotationsachse (2) winkelversetzt angeordneten Magnetfeldsensoren (3, 4) zur Erfassung der Drehbewegung des Messrades und zur Erzeugung von mindestens zwei phasenversetzten Sensorsignalen, wobei eine Störungserkennungseinrichtung (12) mit einer Auswerteschaltung (14) zur Erfassung einer äußeren magnetischen Störung (17) vorhanden ist, und wobei die Auswerteschaltung (14) die Veränderung des elektrischen Phasenversatzes der Sensorsignale des ersten und zweiten Magnetfeldsensors (3, 4) zur Erfassung einer magnetischen Störung (17) überwacht.

## Beschreibung

Die Erfindung betrifft einen Wasserzähler, umfassend ein Messsystem zur Messung einer Durchflussmenge mit einem Messrad, welches proportional zur Durchflussmenge drehbar ausgebildet ist und mit mindestens einem an dem Messrad angeordneten Permanentmagneten und zwei parallel zur Rotationsachse des Messrades versetzten sowie zur Rotationsachse winkelversetzt angeordneten Magnetfeldsensoren zur Erfassung der Drehbewegung des Messrades und zur Erzeugung von mindestens zwei phasenversetzten Sensorsignalen, wobei eine Störungserkennungseinrichtung mit einer Auswerteschaltung zur Erfassung einer äußeren magnetischen Störung vorhanden ist.

Zur Drehzahl- und Drehrichtungserkennung beim Stand der Technik gemäß der DE 195 38 163 C1 werden mehrere Magnetfeldsensoren eingesetzt, die in einem sich drehenden Magnetfeld in Umfangrichtung hintereinander angeordnet sind und von welchen Sensorsignale zur Auswertung in einer Rechnereinheit abgenommen und ausgewertet werden. Hierbei werden vier redundante phasenverschobene Messsignale erzeugt, welche an die Rechnereinheit zur Drehrichtungs- und Drehzahlerkennung übergeben werden. Bei dieser Lösung werden sogenannte MR-Sensoren als Wheatstone'sche Brücken eingesetzt.

Aus der WO 97/16705 A1 ist eine Strömungserkennungseinrichtung mit einer Auswerteschaltung zur Erfassung einer äußeren magnetischen Störung bekannt. Hierbei ist ein dritter Sensor in Form eines Hall-Sensors vorgesehen, um ein internes Signal zu erzeugen, das durch den Mikroprozessor zur Messung von fehlerhaften Impulsen und fehlerhaften Bit-Mustern dient. Der elektrische Phasenversatz zwischen dem ersten und dem zweiten Sensorsignal könnte auch gar nicht erfasst werden, da beim Stand der Technik der Phasenversatz immer gleich ist.

Bei Verbrauchszählern, insbesondere bei Wasserzählern, besteht das Problem, dass sie manipulierbar sind, und zwar mit einem starken Magneten. Durch den Magneten, der von außen an den Wasserzähler angelegt wird, wird ein Turbinen- oder Schaufelrad des Zählers, das die eingebauten Magnete trägt, abgebremst oder sogar völlig blockiert. Dadurch arbeitet der Wasserzähler unkorrekt und misst einen niedrigeren oder gar keinen Verbrauch.

Der Erfindung liegt die Aufgabe zugrunde, ein solches Messsystem so weiterzubilden, dass eine derartige Manipulation unmittelbar oder auch nachträglich festgestellt werden kann.

Diese Aufgabe wird durch die kennzeichnenden Merkmale des Anspruches 1 in Verbindung mit den Merkmalen des Oberbegriffs gelöst.

Die Erfindung beruht auf der Erkenntnis, dass ein zusätzliches, äußeres Magnetfeld den Phasenversatz verändert. Das äußere Magnetfeld wird nämlich mit dem Magnetfeld der eingebauten Magnete überlagert, wodurch sich der Signalverlauf der Magnetfeldsensoren verändert.

Durch die erfindungsgemäße Störungserkennungseinrichtung mit einer Auswerteschaltung, die den Phasenversatz der Sensorsignale überwacht, ist es möglich, die magnetischen Störungen und somit eine Manipulation festzustellen.

Weitere vorteilhafte Merkmale sind den Unteransprüchen zu entnehmen.

In einer vorteilhaften Weiterbildung des erfindungsgemäßen Systems ist vorgesehen, dass die Auswerteschaltung derart ausgebildet ist, dass sie einen Zeitpunkt und/oder eine Zeitdauer der magnetischen Störung speichert. Dadurch kann eine Manipulation zweifelsfrei nachgewiesen und sogar eine Aussage über den Umfang der Manipulation getroffen werden.

Zweckmäßigerweise umfasst das System auch eine Drehrichtungserfassungsschaltung, die derart ausgebildet ist, dass sie aus der Phasenlage von zwei Sensorsignalen eines Sensors, insbesondere von Sinus- und Kosinussignalen dieses Sensors, eine Drehrichtung des Messrades bzw. des Permanentmagneten des Messrades feststellt, um zu ermitteln, ob der Permanentmagnet, insbesondere der Wasserzähler, vorwärts oder rückwärts läuft.

Eine genaue Messung des zu ermittelnden Phasenversatzes ergibt sich auch, wenn die Störungserkennungseinrichtung und/oder die Drehrichtungserfassungsschaltung so ausgebildet sind, dass die Phasenlage anhand der Nulldurchgänge der Sensorsignale bestimmt wird. Die Nulldurchgänge lassen sich in einfacher Weise durch Komparatoren sehr genau feststellen und die entsprechenden Signalverläufe leicht digitalisieren.

Günstig ist es, wenn jeder Magnetfeldsensor mindestens ein Sensorpaar umfasst, so dass jeweils ein Sinussignal und ein Kosinussignal von jedem Magnetfeldsensor erzeugt wird. Dadurch ist eine Ermittlung der Durchflussrichtung möglich, selbst wenn einer der Magnetfeldsensoren defekt sein sollte.

Von Vorteil ist es, wenn die Magnetfeldsensoren als magnetoresistive Winkelsensoren oder als Hallsensoren ausgebildet sind. Diese sind sehr messempfindlich und können jede Magnetfeldveränderung durch Manipulationsversuch zuverlässig erfassen.

Eine einfache sowie wirkungsvolle Maßnahme zur Störungserkennung ergibt sich bei 2-poliger Magnetanordnung und MR-Sensoren, wenn eine kreisbogenförmige Anordnung der Magnetfeldsensoren unter einem Winkel von 90° gegeben ist. In diesem Fall sind deren Signale jeweils genau entgegengesetzt (d. h. um 180 ° verschoben), so dass eine Manipulation einfach zu erkennen ist.

Alternativ kann aber auch eine Magnetanordnung mit mehreren Permanentmagneten und mit mehr als zwei Polen im 360° Winkel vorhanden sein. Es können vierpolige, sechspolige, achtpolige (usw.) Anordnungen gebildet werden. Auch eine dreipolige Anordnung ist grundsätzlich möglich, wenn z.B. drei um 120 ° versetzte Magnete so angeordnet sind, dass z.B. ihre Nordpole nach außen zeigen, während ihre Südpole nach innen gerichtet sind oder umgekehrt. Dies kann auch mit mehr als drei Magneten geschehen.

Eine weiter bevorzugte Maßnahme zeichnet sich dadurch aus, dass die Auswerteschaltung einen Microcontroller mit einer Software enthält, die eine Signalauswertung beider Magnetfeldsensoren durchführt. Die Softwarelösung zeichnet sich durch ein hohes Maß an Flexibilität aus und ist kostengünstig umzusetzen.

Besonders günstig ist eine Ausbildung derart, dass die Messung der Durchflussmenge auch noch bei Ausfall eines der beiden Sensoren gegeben ist, wobei ein Ausgangssignal des intakten anderen Sensors, welches proportional zu den Umdrehungen ist, zur Messung der Durchflussmenge herangezogen wird. Dadurch ist eine Wasserzählung auch bei teilweise defekten Wasserzählern möglich.

Außerordentlich zuverlässig arbeitet der Zähler, wenn zwei für beide Magnetfeldsensoren unabhängige Zähler zur Messung der Messradumdrehungen vorhanden sind, so dass erkennbar ist, dass einer der beiden Zähler defekt sein muss, wenn die Zähler unterschiedliche Werte anzeigen, Ein Defekt lässt sich einfach feststellen, und der Zähler kann ausgetauscht werden, bevor er völlig defekt wird.

Eine Montage des erfindungsgemäßen Systems wird erheblich vereinfacht, wenn Mittel zur drahtlosen Übertragung der Umdrehungsanzahl und/oder einer Meldung der magnetischen Störung zu einer Mess- und/oder Auswerteeinheit vorhanden sind. Diese Einheit kann dann an beliebiger Stelle montiert werden bzw. leicht zur Wandmontage vorgesehen sein. Die fehlenden Signalübertragungskabel verringern außerdem die Manipulationsgefahr. Eine Beeinflussung bzw. Manipulation durch Anzapfen von Kabeln wird insofern wirkungsvoll verhindert.

Die Erfindung sowie weitere Vorteile derselben werden anhand der Figurenbeschreibung beispielhaft erläutert.

Es zeigt:
- Fig. 1: eine bevorzugte Ausführungsform eines erfindungsgemäßen Wasserzählers;
- Fig. 2: eine Anordnung von MR-Sensoren und Winkel von 90 °;
- Fig. 3: einen Signalverlauf eines unmanipulierten Magnetfeldsensorsystems eines Wasserzählers nach Fig. 2;
- Fig. 4: einen Signalverlauf eines manipulierten Magnetfeldsensorsystems nach Fig. 2;
- Fig. 5: einen Signalverlauf gemäß Fig. 3 in einer digitalisierten Form.

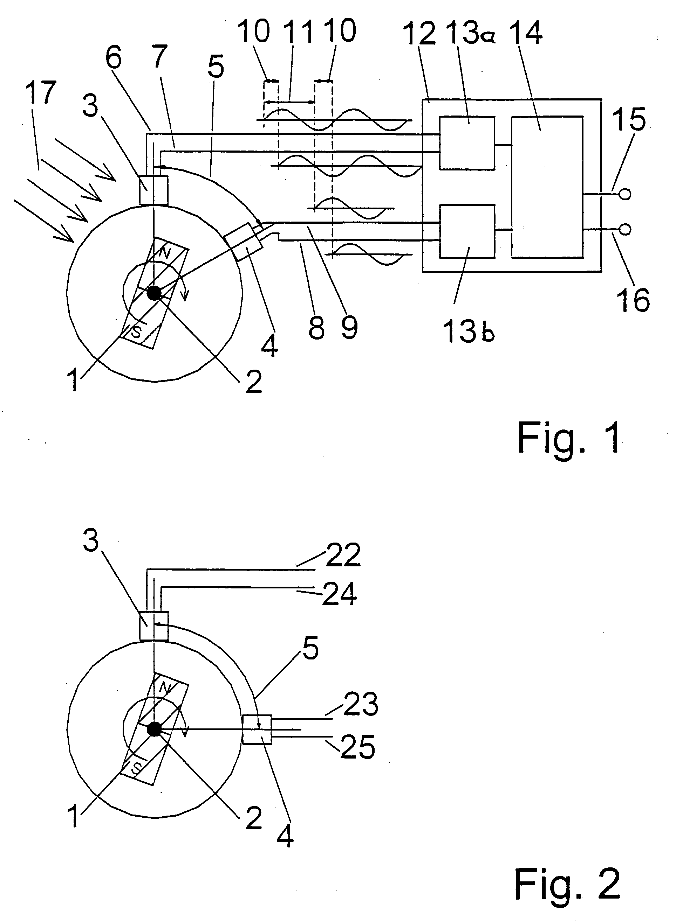

Fig. 1 zeigt ein Messsystem für einen Wasserzähler zur Verbrauchsmessung. Dieser umfasst ein Turbinenrad (alternativ ein Schaufelrad) mit einem Permanentmagneten 1, insbesondere einen stabförmigen oder zumindest länglichen Magneten, der symmetrisch an einer Rotationsachse 2 gelagert ist und sich zusammen mit dem Turbinenrad (nicht gezeigt) dreht. Das Turbinenrad (Messrad) und der Magnet 1 drehen sich proportional zur Wasser-Durchflussmenge.

Der Zähler ist mit zwei parallel zur Rotationsachse 2 des Turbinenrades versetzten sowie zur Rotationsachse 2 winkelversetzt angeordneten Magnetfeldsensoren 3 und 4 zur Erfassung der Drehbewegung des Turbinenrades mit dem mindestens einen Permanentmagneten und zur Erzeugung von zwei phasenversetzten Sensorsignalen versehen. Der Winkelversatz wird mit dem Bezugszeichen 5 veranschaulicht.

Der Magnet 1 erzeugt durch seine Drehung ein magnetisches Drehfeld, das von den Sensoren 3 und 4 erfasst wird.

Die Sensoren 3 und 4 geben in Abhängigkeit der Magnetstellung ein sich änderndes Signal. Vorzugsweise sind die Sensoren 3 und 4 winkelversetzt, so dass ein periodisches und ein zwischen Sensor 3 und 4 phasenversetztes Signal entsteht.

Das Bezugszeichen 10 in Fig. 1 veranschaulicht den Phasenversatz zwischen einem Sinus- und Kosinussensor eines Magnetfeldsensors 3 bzw. 4. Bezugszeichen 11 veranschaulicht einen Phasenversatz zwischen den beiden Sinussensoren.

Erfindungsgemäß ist eine Störungserkennungseinrichtung 12 mit einer Auswerteschaltung 14, die den Phasenversatz der Sensorsignale zur Erfassung einer magnetischen Störung 17 überwacht, vorgesehen.

Die Sensoren 3 und 4, die vorzugsweise als magnetoresistive Winkelsensoren bzw. als Hallsensoren ausgebildet sind, werden durch Leitungen 6, 7 und 8, 9 mit der Störungserkennungseinrichtung 12 verbunden.

Vorzugsweise besitzt jeder Sensor 3, 4 mindestens ein Sensorlementenpaar. Jedes Paar erzeugt wiederum zwei jeweils um 90° versetzte Signale, wie Fig. 1 veranschaulicht, die über die Leitung 6, 7 bzw. 8, 9 übertragen werden. Jeder Sensor 3, 4 erzeugt also ein Sinussignal und ein Kosinussignal. Durch diesen Phasenversatz ist es möglich, eine Drehrichtung und eine Durchflussmenge festzustellen, selbst wenn einer der Sensoren 3, 4 defekt sein sollte.

Jeder Magnetfeldsensor 3, 4 weist also einen Sinussensor (Sensorelement) und einen Kosinussensor auf. Von einer Störung ist beispielsweise dann auszugehen, wenn die Phasenbeziehung zwischen dem Sinussensor des ersten Magnetfeldsensors 3 und dem Sinussensor des zweiten Magnetfeldsensors 4 gleich ist oder allgemein vom Phasenversatz 11 des ungestörten Falls abweicht. Gleiches gilt für den Kosinussensor der beiden Magnetfeldsensoren.

Auch kann jeder Sensor 3, 4 zwei Vollbrücken mit jeweils vier Sensorelementen umfassen (Wheatstone'sche Brücke).

Die Signalleitungen 6, 7 des ersten Sensors 3 sind mit einer ersten Komparatorschaltung 13a (Komparator) verbunden, während die Signalleitung 8, 9 des zweiten Sensors 4 mit einer zweiten Komparatorschaltung 13b (Komparator) verbunden sind, um einerseits einen Nulldurchgang zu erfassen, welcher einer ansteigenden oder abfallenden Impulsflanke eines Rechtecksignals entspricht, und um andererseits digitale Signale aus den versetzten Signalen bzw. den sinus- bzw. kosinusförmigen Signalen zu schaffen. Die Komparatoren sind mit einer Auswerteeinheit 14 verbunden, die erfindungsgemäß den Phasenversatz der Sensorsignale überwacht. Daher ist die Störungserkennungseinrichtung 12 so ausgebildet, dass sie die vier Phasenlagen an Nulldurchgängen der Sensorsignale überwacht.

Die Auswerteschaltung 14 ist vorzugsweise derart ausgebildet, dass sie einen Zeitpunkt und/oder eine Zeitdauer der magnetischen Störung 17 vorzugsweise in einem RAM-Speicher (Schreib-Lese-Speicher) oder in einem nichtflüchtigen Speicher (z. B. EEPROM) speichert. Außerdem enthält sie einen Microcontroller mit einer zum Beispiel in einem ROM-Speicher (Nur-Lese-Speicher) gespeicherten Software, die eine Signalauswertung beider Magnetfeldsensoren durchführt.

Insbesondere wird eine Messung der Durchflussmenge auch noch bei Ausfall eines der beiden Sensoren durchgeführt, wobei ein Ausgangssignal des intakten anderen Sensors 3 bzw. 4, welches proportional zu den Umdrehungen ist, zur Messung der Durchflussmenge herangezogen wird. Hierbei sind für beide Magnetfeldsensoren 3 und 4 unabhängige Zähler zur Messung der Messradumdrehungen bzw. der Umdrehungen des Permanentmagneten in der Auswerteeinheit 14 vorhanden, so dass, wenn die Zähler unterschiedliche Werte anzeigen, erkennbar ist, dass einer der beiden Zähler defekt ist.

Die Störungserkennungseinrichtung 12 hat eine Schnittstelle (beispielhaft durch Leitungen 15, 16 symbolhaft veranschaulicht), damit Daten ausgelesen werden können und damit ggf. eine Manipulation (Störung 17) nachgewiesen werden kann.

Diese Störung 17 merkt sich die Vorrichtung mit der Folge, dass dann wenn der Zähler ausgelesen wird, unmittelbar erkannt wird, dass eine Störung vorgelegen hat. In einem solchen Fall ist dann davon auszugehen, dass der Wasserverbrauch geschätzt wird.

Wenn die Magnetkraft von außen nicht ausreicht, um den sich drehenden Magneten anzuhalten, kann es passieren, dass der Magnet sich noch dreht, aber langsamer, mit der Folge, dass zwar weiterhin ein Phasenversatz vorhanden ist, aber in abweichendem Maße als normal gilt. Die Anordnung soll aber auch solche Abweichungen von einem vorgegebenen Phasenversatz als Störung registrieren.

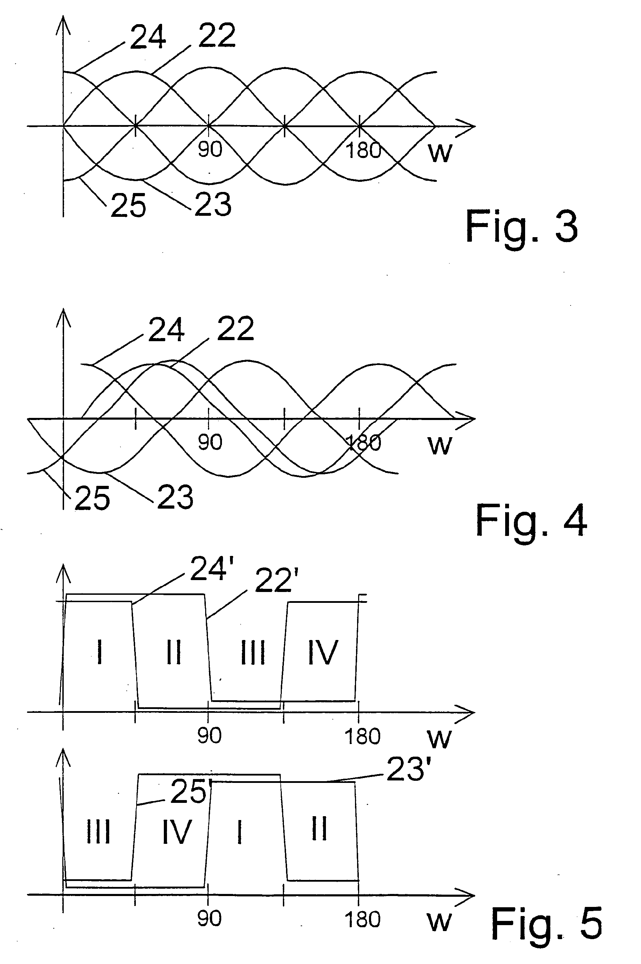

Die kreisbogenförmige Anordnung der magnetoresistiven Magnetfeldsensoren unter einem Winkel von 90° verursacht, dass ein Sinussignal 22 und ein um 180° verschobenes Sinussignal 23 als Ausgangssignal vorhanden sind, wenn keine Störung 17 vorhanden ist, wie dies in Fig. 3 veranschaulicht wird.

Weiterhin ist eine Drehrichtungserfassungsschaltung möglich; aus Fig. 3 ist der Signalverlauf von Sensor 3 und Sensor 4 erkennbar. Jeder Sensor liefert hierbei die Signale 22 und 24 als Sinus- und Kosinussignal, aus welchen die Drehrichtung des drehenden Magneten ermittelt werden kann.

Geht z. B. das Signal 22 vor, d. h., es erreicht sein Maximum vor dem Signal 24, dann zeigt dies eine Drehrichtung an. Die andere Drehrichtung wird angezeigt, wenn das Signal 24 zu dem Signal 22 vorgeht. Gleiches gilt für die Signale 23, 25 des anderen Sensors.

In diesem Zusammenhang wird alternativ auf die korrespondierende digitalisierte Form des Signalverlaufs verwiesen. Die korrespondierenden Sinus- und Kosinussignale sind mit 22', 24' und 23', 25' bezeichnet. Die Phaseninformation wird hierbei auf vier Zustände I, II, III, IV reduziert. So kann z. B. die Drehrichtung aus der zeitlichen Abfolge der Zustände I bis IV ermittelt werden.

Alternativ ist eine nicht gezeigte Magnetanordnung mit mehreren Permanentmagneten und mit mehr als zwei Polen im 360° Winkel möglich. Hierbei ist eine kreisbogenförmige, gleichmäßig am Kreisumfang verteilte Magnetanordnung zu bevorzugen.

Ferner können Mittel zur drahtlosen Übertragung der Umdrehungsanzahl und/oder einer Meldung der magnetischen Störung zu einer Mess- und/oder Auswerteinheit vorhanden sein.

### Bezugszeichenliste

- 1: Permanentmagnet
- 2: Rotationsachse
- 3,4: Magnetfeldsensoren
- 5: Winkelversatz
- 6 - 9: Leitungen
- 10: Phasenversatz zwischen sin- und cos-Signal eines Sensors
- 11: Phasenversatz zwischen zwei Sensoren
- 12: Störungserkennungseinrichtung
- 13a: erste Komparatorschaltung
- 13b: zweite Komparatorschaltung
- 14: Auswerteschaltung
- 17: magnetische Störung
- 22, 24: sin-Signal
- 23, 25: cos-Signal
- 22', 24': sin-Signal nach Komparatorschaltung
- 23', 25': cos-Signal nach Komparatorschaltung

## Patentansprüche

1. Wasserzähler, umfassend ein Messsystem zur Messung einer Durchflussmenge mit einem Messrad, welches proportional zur Durchflussmenge drehbar ausgebildet ist und mit mindestens einem an dem Messrad angeordneten Permanentmagneten (1) sowie zwei parallel zur Rotationsachse (2) des Messrades versetzten sowie zur Rotationsachse (2) winkelversetzt angeordneten Magnetfeldsensoren (3, 4) zur Erfassung der Drehbewegung des Messrades und zur Erzeugung von mindestens zwei phasenversetzten Sensorsignalen, wobei eine Störungserkennungseinrichtung (12) mit einer Auswerteschaltung (14) zur Erfassung einer äußeren magnetischen Störung (17) vorhanden ist,
**dadurch gekennzeichnet,**
**dass** die Auswerteschaltung (14) die Veränderung des elektrischen Phasenversatzes der Sensorsignale des ersten und zweiten Magnetfeldsensors (3, 4) zur Erfassung einer magnetischen Störung (17) überwacht.

2. Wasserzähler nach Anspruch 1,
**dadurch gekennzeichnet,**
**dass** die Auswerteschaltung (14) derart ausgebildet ist, dass sie einen Zeitpunkt und/oder eine Zeitdauer der magnetischen Störung (17) speichert.

3. Wasserzähler nach Anspruch 1,
**gekennzeichnet durch**
eine Drehrichtungserfassungsschaltung, die derart ausgebildet ist, dass sie aus der Phasenlage von zwei Sensorsignalen die Drehrichtung des Messrades bzw. des Permanentmagneten (1) feststellt, um zu ermitteln, ob der Permanentmagnet (1), insbesondere der Wasserzähler, vorwärts oder rückwärts läuft.

4. Wasserzähler nach einem der vorhergehenden Ansprüche,
**dadurch gekennzeichnet,**
**dass** jeder Magnetfeldsensor (3, 4) mindestens ein Sensorpaar umfasst, so dass jeweils ein Sinussignal (22, 23) und ein Kosinussignal (24, 25) von jedem Magnetfeldsensor (3, 4) erzeugt wird.

5. Wasserzähler nach einem der vorhergehenden Ansprüche,
**dadurch gekennzeichnet,**
**dass** jeder Magnetfeldsensor (3, 4) als Vollbrücke ausgebildet ist.

6. Wasserzähler nach einem der vorhergehenden Ansprüche,
**dadurch gekennzeichnet,**
**dass** die Störungserkennungseinrichtung (12) und/oder die Drehrichtungserfassungsschaltung so ausgebildet sind, dass eine Phasenlage an Nulldurchgängen der Sensorsignale bestimmt wird.

7. Wasserzähler nach einem der vorhergehenden Ansprüche,
**dadurch gekennzeichnet,**
**dass** die Magnetfeldsensoren (3, 4) als magnetoresistive Winkelsensoren ausgebildet sind.

8. Wasserzähler nach einem der vorhergehenden Ansprüche,
**dadurch gekennzeichnet,**
**dass** die Magnetfeldsensoren (3, 4) als Hallsensoren ausgebildet sind oder Hallsensoren umfassen.

9. Wasserzähler nach einem der vorhergehenden Ansprüche,
**gekennzeichnet durch**
eine zweipolige Magnetanordnung.

10. Wasserzähler nach Anspruch 9,
**gekennzeichnet durch**
eine kreisbogenförmige Anordnung der Magnetfeldsensoren (3, 4) unter einem Winkel von 90°.

11. Wasserzähler nach einem der Ansprüche 1 bis 8,
**gekennzeichnet durch**
eine Magnetanordnung mit mehreren Permanentmagneten und mit mehr als zwei Polen im 360° Winkel.

12. Wasserzähler nach Anspruch 11,
**gekennzeichnet durch**
eine kreisbogenförmige, gleichmäßig am Kreisumfang verteilte Magnetanordnung.

13. Wasserzähler nach einem der vorhergehenden Ansprüche,
**dadurch gekennzeichnet,**
**dass** die Auswerteschaltung (14) einen Microcontroller mit einer Software enthält, die eine Signalauswertung beider Magnetfeldsensoren (3, 4) durchführt.

14. Wasserzähler nach einem der vorhergehenden Ansprüche,
**gekennzeichnet durch**
eine Ausbildung derart, dass die Messung der Durchflussmenge auch noch bei Ausfall eines der beiden Sensoren (3, 4) gegeben ist, wobei ein Ausgangssignal des intakten anderen Sensors, welches proportional zu den Umdrehungen ist, zur Messung der Durchflussmenge herangezogen wird.

15. Wasserzähler nach einem der vorhergehenden Ansprüche,
**dadurch gekennzeichnet,**
**dass** zwei für beide Magnetfeldsensoren (3, 4) unabhängige Zähler zur Messung der Messradumdrehungen vorhanden sind, so dass, wenn die Zähler unterschiedliche Werte anzeigen, erkennbar ist, dass einer der beiden Zähler defekt ist.

16. Wasserzähler nach einem der vorhergehenden Ansprüche,
**dadurch gekennzeichnet,**
**dass** das Messrad ein Schaufel- oder ein Turbinenrad ist.

17. Wasserzähler nach einem der vorhergehenden Ansprüche,
**gekennzeichnet durch**
Mittel zur drahtlosen Übertragung der Umdrehungsanzahl und/oder einer Meldung der magnetischen Störung (17) zu einer Mess- und/oder Auswerteeinheit.
